# EUROPEAN PATENT SPECIFICATION

(11) **EP 3 371 392 B1**
(45) Date of publication and mention of the grant of the patent: **23.02.2022**
(21) Application number: 16794003.0
(22) Date of filing: 04.11.2016
(51) Int. Cl.: E04G 21/32, E04C 2/42, B29C 70/00

(54) **INSULATED TRELLIS MAT**
ISOLIERTE TRELLISMATTE
NATTE EN TREILLIS ISOLÉ

(30) Priority: 04.11.2015 GB 201519470
(43) Date of publication of application: 12.09.2018
(73) Proprietor: Oxford Safety Components Limited, Launton Bicester Oxfordshire OX26 5AH (GB)
(72) Inventor: BLACK, John Alexander, Aylesbury, Buckinghamshire HP18 9LD (GB); BLACK, Robert David, Oxford, Oxfordshire OX2 9JJ (GB)
(74) Representative: Hindles Limited
(86) International application number: PCT/GB2016/053439
(87) International publication number: WO 2017/077323

(56) References cited:
- EP-A1- 1 105 191
- EP-A2- 0 361 795
- CN-A- 102 373 769
- GB-A- 1 296 529
- US-A- 4 821 481

## Description

This invention relates to an electrically insulated trellis mat.

### BACKGROUND

A trellis mat comprises a first array of parallel tubular members and a second array of parallel tubular members, each of the second array of parallel tubular members being pivotably connected to a plurality of the first array of parallel tubular members whereby to form a trellis. The trellis mat can be used to provide a safe working platform and prevent falls through cavities from roof spaces. In particular, the trellis mat can be transported in a compact configuration, and expanded on site to provide a working platform bridging sparsely spaced support members. In some examples, a trellis mat is used to provide a safe working platform supported by floor joists or rafters, but where floor boards are not present. The trellis mat provides a safe working platform for performing a variety of tasks such as inspection work, maintenance, plumbing or aerial rigging.

In some examples, it may be advantageous to have a trellis mat which is electrically insulated to minimise the possibility of accidental electrical shock if the trellis mat is, for example, placed on top of faulty electrical wiring.

It is known to provide a trellis mat where each of the tubular members of the trellis mat is formed from aluminium tube surrounded entirely by plastics insulation. In this way, the trellis mat can be considered an electrically insulated trellis mat because electrical current cannot pass through the material of the trellis mat due to the plastics insulation.

EP1105191 describes a trellis comprising a first and a second arrey of plastic rigid member. EP0361795 describes a process for forming reinforced plastics articles using glass fibre with different orientations.

Unfortunately, during repeated use and transport, the plastics insulation can be damaged. This requires that an inspection of the trellis mat be carried out prior to every use. In the event that damage to the insulation is found, the trellis mat may no longer be insulating and a new mat may be required. The present disclosure seeks to provide an electrically insulated trellis mat which overcomes at least some of the disadvantages of the prior art.

### BRIEF SUMMARY OF THE DISCLOSURE

In accordance with an aspect of the present disclosure, there is provided an electrically insulated trellis comprising a first array of parallel tubular members and a second array of parallel tubular members. Each of the second array of parallel tubular members is pivotably connected to a plurality of the first array of parallel tubular members whereby to form a trellis. Each of the tubular members is formed from glass-reinforced polymer. A first set of fibres in the glass-reinforced polymer are substantially parallel and aligned in a first direction and a second set of fibres in the glass-reinforced polymer, distinct from the first set, are substantially parallel and aligned in a second direction different to the first direction.

Thus, the sets of parallel fibres running in different directions forming the tubular members ensure that the tubular members will be strong enough for use as a support trellis, even when holes are formed in the tubular members for accommodating pivotable fasteners to connect the first array of parallel tubular members to the second array of parallel tubular members. Fibres aligned in the first direction will act, at least partly, to hold together the fibres aligned in the second direction, increasing the resistance of the trellis to splitting as a result of holes defined in the tubular members to accommodate pivotable fasteners. The glass-reinforced polymer is an electrically insulating material, making the trellis inherently electrically insulated, regardless of any damage to the trellis.

The first array and second array may be pivotably connected by pivotable fasteners. The pivotable fasteners may be rivets. In some embodiments, the pivotable fasteners may be electrically insulated.

The second direction may be angularly spaced from the first direction by 60 degrees. In this case, the insulated trellis may comprise a third set of fibres being substantially parallel and aligned in a third direction different from the first and second directions and angularly spaced 60 degrees from each of the first direction and the second direction.

The second direction may be substantially orthogonal to the first direction. Thus, in this configuration, substantially the entire tensile strength of the second set of fibres can act to resist splitting of the first set of fibres. The first direction may be an axial direction. The first direction may be approximately 45 degrees to the axial direction.

Each tubular member may have a substantially rectangular cross-section. In one embodiment, the rectangular cross-section is a square cross-section. In some embodiments, each tubular member may have a cross-section having rounded corners.

At least one of the first array and the second array may be provided with at least one respective gripping surface.

The gripping surface may be provided on an external surface of the trellis. The gripping surface may be provided on one external surface of the trellis to allow the trellis to grip against an object or plurality of objects on which it is supported, or to provide grip for persons or objects supported by the trellis. The trellis may be reversible, or may be single-sided, such that where the at least one gripping surface is provided on only one side, it is always the top surface of the trellis when deployed, or always the bottom surface of the trellis when deployed. In some embodiments, the trellis may be provided with a gripping surface on two external surfaces of the trellis.

The respective gripping surface may be provided on a respective gripping member affixed to at least one tubular member of the first array or the second array. The gripping member may be adhesively affixed. Thus, the tubular members need not be manufactured to have a gripping surface integrally formed with the tubular member, reducing manufacturing complexity and cost.

The present disclosure extends to a kit of parts for forming the insulated trellis. The kit of parts comprises a plurality of tubular members configured to form a first array of parallel tubular members and a second array of parallel tubular members and a plurality of pivotable fasteners for pivotably connecting the first array of parallel tubular members with the second array of parallel tubular members.

### BRIEF DESCRIPTION OF THE DRAWINGS

Embodiments of the invention are further described hereinafter with reference to the accompanying drawings, in which:
Figure 1 is a plan view of a trellis mat;
Figure 2 is a cross-sectional view of a tubular member of an electrically insulated trellis mat according to the present disclosure; and
Figure 3 is an illustration of a fibre structure of a tubular member according to the present disclosure.

### DETAILED DESCRIPTION

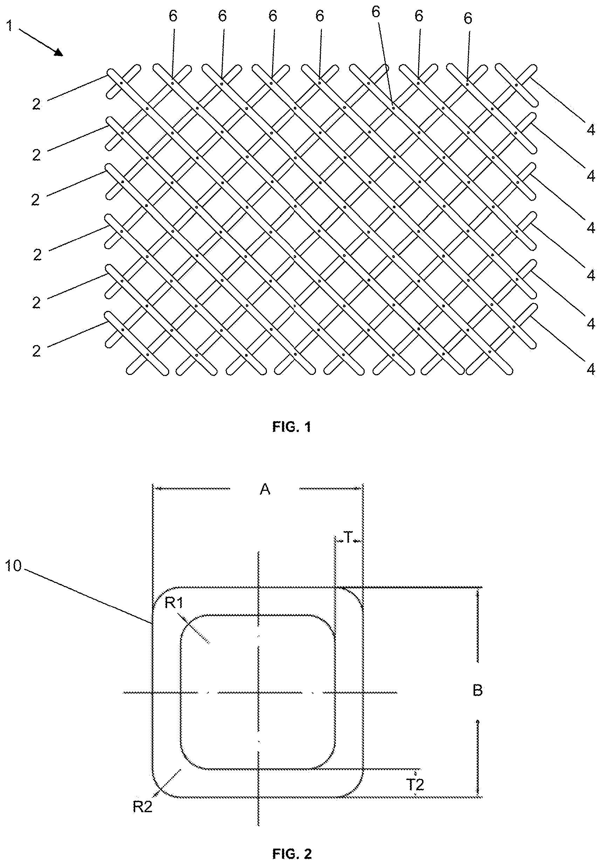

Figure 1 is a plan view of a trellis mat 1. The trellis mat 1 comprises a first array of parallel tubular members 2 and a second array of parallel tubular members 4. Each of the first array of tubular members 2 is pivotably connected to any of the second array of parallel tubular members 4 crossed by the first array of tubular members 2 by rivets 6 functioning as pivot points. The trellis mat 1 is shown in an expanded configuration where the first array of parallel tubular members 2 is arranged substantially perpendicular to the second array of parallel tubular members 4. It will be appreciated that, from this view, the first array of parallel tubular members 2 is provided on top of the second array of parallel tubular members 4. As in trellis mats of the prior art, the mat can be collapsed into a transportable configuration by compressing the trellis mat 1 either horizontally or vertically. In both cases the directions of each of the members in the first array of parallel tubular members 2 and the second array of parallel tubular members 4 will more closely align. In most trellis mats, each of the second array of parallel tubular members will be pivotably connected to a plurality of the first array of parallel tubular members, whereby to form a trellis.

The trellis mat 1 is substantially sized as in trellis mats of the prior art. In the presently described embodiment, the trellis mat, in a deployed configuration, has a length of approximately 2 metres and a width of approximately 0.95 metres. An alternative trellis mat can be produced having a length of approximately 2 metres and a width of approximately 0.8 metres. It will be appreciated that other sizes of mat may easily be formed using different numbers of tubular members 2, 4 and different profile sizes for the tubular members.

Figure 2 is a cross-sectional view of a tubular member of an electrically insulated trellis mat according to the present disclosure. The tubular member 10 has a substantially square cross-section, and the length of the side A is identical to the length of the side B. The length A (and therefore also B) is 15 millimetres. The wall thickness T of side B is identical to the wall thickness T2 of side A and is 2 millimetres. The substantially square cross-section has rounded corners. The internal radius of curvature R1 of the tubular member 10 is 2 millimetres. The external radius of curvature R2 of the tubular member 10 is also 2 millimetres. As can be seen, unlike electrically insulated trellis mats of the prior art, the tubular member 10 is formed as a single piece. All parts of the tubular member 10 are insulating because the tubular member 10 is formed from glass fibre-reinforced polymer, which is substantially insulating for the voltages used in the environments in which the electrically insulated trellis mat disclosed herein is to be used. The tubular member 10 is hollow in this particular embodiment.

Although the previously described tubular member 10 has a square cross-section, it will be appreciated that any cross-section providing the required strength and structural rigidity can be used.

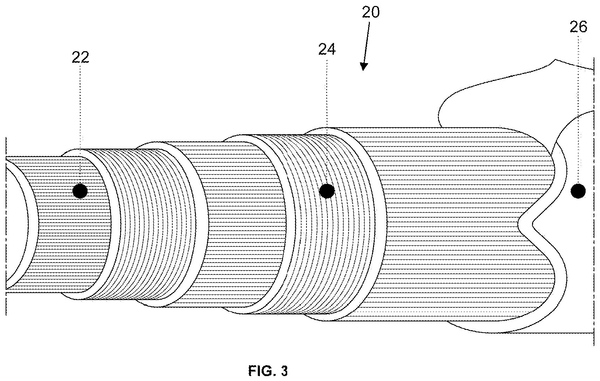

Figure 3 is an illustration of a fibre structure within a glass fibre-reinforced polymer tubular member according to the present disclosure. The tubular member 20 is formed from a plurality of layers, each layer overlaid on the layer beneath. Each layer comprises a plurality of parallel glass fibres. Adjacent layers have their glass fibres orientated in different directions, in this case orthogonally to each other. All the layers sit within a polymer matrix which holds the glass fibres in position. An innermost layer 22 comprises a plurality of glass fibres, each glass fibre running in an axial direction aligned with the axial direction of the tubular member 20. The axial direction may also be referred to as an along-tube direction. Fibres running in the axial direction bring the composite structure the tensile strength and stiffness needed in the lengthwise direction. Another layer 24 comprises a second plurality of glass fibres, each glass fibre running in a circumferential direction, also referred to as an around-tube direction, perpendicular to the axial direction. Crosswise fibres act to hold the lengthwise fibres together and prevent the lengthwise fibres from splitting because the crosswise fibres are orthogonal to the lengthwise fibres. The use of layers of crosswise fibres increases the maximum bending strength of the tubular member 20. In the electrically insulated trellis mat shown in Figure 1, the tubular members are pivotably connected together using pivotable fasteners in the form of rivets. The crosswise fibres ensure that the tubular members do not split when holes are provided in the tubular members for receiving the pivotable fasteners in the form of rivets. The whole structure of the tubular member 20 is protected by a nonwoven or fabric surface. By varying the amount of polymer matrix used on one or more sides of the tubular member 20, the surface finish texture can be modified. For example, using less polymer matrix (or more glass fibres) will expose more glass fibres at the surface and create a rougher surface texture. The rough surface texture is useful where it is desirable to create an electrically insulated trellis which can be provided with one or more gripping surfaces.

An alternative approach is to provide a gripping surface to the tubular members with a gripping member affixed to the tubular member. The gripping member can be adhesively affixed to the tubular member. It will be appreciated that other methods can be used to provide a gripping surface on the trellis suitable for providing grip against an object or plurality of objects on which the trellis is supported, or to provide grip for persons or objects supported by the trellis.

Although the diagram of Figure 3 shows the layers being orientated in mutually orthogonal directions, it will be appreciated that layers of fibres orientated at an angular spacing different from 90 degrees may also provide the benefit of increasing the resistance of the tubular member to splitting when holes are formed in the tubular member. Fibres orientated in a first direction typically have a bracing effect on fibres orientated in a second direction which is different from the first direction due to the relatively high tensile strength of the glass fibres.

Although the diagram of Figure 3 shows at least one layer being orientated in an axial direction and at least one other layer being orientated in a circumferential direction, it will be appreciated that in some configurations, the layers may be orientated in different directions, even where the layers are orientated in a mutually transverse arrangement. For example, in one embodiment, the fibres in a first layer are aligned at an angle of approximately 45 degrees to the axial direction of the tubular member, whereby to extend both axially and circumferentially around the tubular member. The fibres in a second layer are also orientated at an angle of approximately 45 degrees to the axial direction of the tubular member, but in the opposite sense, whereby to extend orthogonally to the fibres in the first layer and also extend both axially and circumferentially around the tubular member.

Although each layer has been described as overlaid on the layer beneath, it will be appreciated that the layers may instead be woven together whereby to form a fabric having mutually orthogonal fibres.

The tubular member 20 is illustrated as having a cylindrical shape with a circular cross-section, but it will be appreciated that the same principles apply to other cross-section shapes, in particular square or rectangular.

Throughout the description and claims of this specification, the words "comprise" and "contain" and variations of them mean "including but not limited to", and they are not intended to (and do not) exclude other components or integers. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. An electrically insulated trellis (1) for forming a working platform and comprising:
a first array of parallel tubular members (2, 20); and
a second array of parallel tubular members (4, 20), each of the second array of parallel tubular members being pivotably connected to a plurality of the first array of parallel tubular members whereby to form a trellis,
**characterized in that**
each of the tubular members (2, 4, 20) is formed from glass-reinforced polymer, and
**in that** a first set of fibres (22) in the glass-reinforced polymer are substantially parallel and aligned in a first direction and a second set of fibres (24) in the glass-reinforced polymer, distinct from the first set, are substantially parallel and aligned in a second direction different to the first direction.

2. An electrically insulated trellis as claimed in claim 1, wherein the first array and second array are pivotably connected by rivets (6).

3. An electrically insulated trellis as claimed in claim 1 or claim 2, wherein the second direction is substantially orthogonal to the first direction.

4. An electrically insulated trellis as claimed in claim 3, wherein the first direction is one of an axial direction of each of the tubular members or a direction of approximately 45 degrees to the axial direction.

5. An electrically insulated trellis as claimed in any preceding claim, wherein each tubular member has a substantially rectangular cross-section.

6. An electrically insulated trellis as claimed in any proceeding claim, wherein at least one of the first array and the second array is provided with at least one respective gripping surface.

7. An electrically insulated trellis as claimed in claim 6, wherein the respective gripping surface is provided on a respective gripping member affixed to at least one member of the first array or the second array.

8. A kit of parts for forming the electrically insulated trellis (1) as claimed in any preceding claim, the kit of parts comprising:
a plurality of tubular members (2, 4, 20) configured to form a first array of parallel tubular members (2, 20) and a second array of parallel tubular members (4, 20); and
a plurality of pivotable fasteners (6) for pivotably connecting the first array of parallel tubular members with the second array of parallel tubular members, wherein each of the tubular members (2, 4, 20) is formed from glass-reinforced polymer, and wherein a first set of fibres (22) in the glass-reinforced polymer are substantially parallel and aligned in a first direction and a second set of fibres (24) in the glass reinforced polymer, distinct from the first set, are substantially parallel and aligned in a second direction different to the first direction.

## Patentansprüche

1. Elektrisch isoliertes Gitter (1) zum Ausbilden einer Arbeitsplattform und das Folgendes umfasst:
eine erste Anordnung paralleler rohrförmiger Elemente (2, 20); und
eine zweite Anordnung paralleler rohrförmiger Elemente (4, 20), wobei jede der zweiten Anordnung paralleler rohrförmiger Elemente mit mehreren der ersten Anordnung paralleler rohrförmiger Elemente schwenkbar verbunden ist, wodurch ein Gitter ausgebildet wird,
**dadurch gekennzeichnet, dass**
jedes der rohrförmigen Elemente (2, 4, 20) aus glasfaserverstärktem Polymer ausgebildet ist, und
dadurch, dass ein erster Satz Fasern (22) in dem glasfaserverstärkten Polymer im Wesentlichen parallel und in einer ersten Richtung ausgerichtet ist und ein zweiter Satz Fasern (24) in dem glasfaserverstärkten Polymer, der sich von dem ersten Satz unterscheidet, im Wesentlichen parallel und in einer von der ersten Richtung verschiedenen zweiten Richtung ausgerichtet ist.

2. Elektrisch isoliertes Gitter nach Anspruch 1, wobei das erste Array und das zweite Array durch Nieten (6) schwenkbar verbunden sind.

3. Elektrisch isoliertes Gitter nach Anspruch 1 oder 2, wobei die zweite Richtung im Wesentlichen orthogonal zu der ersten Richtung ist.

4. Elektrisch isoliertes Gitter nach Anspruch 3, wobei die erste Richtung eine axiale Richtung jedes der rohrförmigen Elemente oder eine Richtung von ungefähr 45 Grad zu der axialen Richtung ist.

5. Elektrisch isoliertes Gitter nach einem der vorhergehenden Ansprüche, wobei jedes rohrförmige Element einen im Wesentlichen rechteckigen Querschnitt aufweist.

6. Elektrisch isoliertes Gitter nach einem der vorhergehenden Ansprüche, wobei das erste Array und/oder das zweite Array mit wenigstens einer entsprechenden Greifoberfläche versehen ist.

7. Elektrisch isoliertes Gitter nach Anspruch 6, wobei die jeweilige Greifoberfläche an einem jeweiligen Greifelement bereitgestellt ist, das an wenigstens einem Element des ersten Arrays oder des zweiten Arrays angebracht ist.

8. Teilesatz zum Ausbilden des elektrisch isolierten Gitters (1) nach einem der vorhergehenden Ansprüche, wobei der Teilesatz Folgendes umfasst:
mehrere rohrförmige Elemente (2, 4, 20), die konfiguriert sind, um eine erste Anordnung paralleler rohrförmiger Elemente (2, 20) und eine zweite Anordnung paralleler rohrförmiger Elemente (4, 20) auszubilden; und
mehrere schwenkbare Befestigungsmittel (6) zum schwenkbaren Verbinden der ersten Anordnung paralleler rohrförmiger Elemente mit der zweiten Anordnung paralleler rohrförmiger Elemente, wobei jedes der rohrförmigen Elemente (2, 4, 20) aus glasfaserverstärktem Polymer ausgebildet ist, und wobei ein erster Satz Fasern (22) in dem glasfaserverstärkten Polymer im Wesentlichen parallel und in einer ersten Richtung ausgerichtet ist und ein zweiter Satz Fasern (24) in dem glasfaserverstärkten Polymer, der sich von dem ersten Satz unterscheidet, im Wesentlichen parallel und in einer von der ersten Richtung verschiedenen zweiten Richtung ausgerichtet ist.

## Revendications

1. Treillis électriquement isolé (1) destiné à former une plate-forme de travail et comprenant : un premier réseau d'éléments tubulaires parallèles (2, 20) ; et
un second réseau d'éléments tubulaires parallèles (4, 20), chacun du second réseau d'éléments tubulaires parallèles étant relié de manière pivotante à une pluralité du premier réseau d'éléments tubulaires parallèles de manière à former un treillis, **caractérisé en ce que**
chacun des éléments tubulaires (2, 4, 20) est formé d'un polymère renforcé de verre, et
**en ce qu'**un premier ensemble de fibres (22) dans le polymère renforcé de verre sont sensiblement parallèles et alignés dans une première direction et un second ensemble de fibres (24) dans le polymère renforcé de verre, distinct du premier ensemble, sont sensiblement parallèles et alignés dans une seconde direction différente de la première direction.

2. Treillis électriquement isolé selon la revendication 1, dans lequel le premier réseau et le second réseau sont reliés de manière pivotante par des rivets (6).

3. Treillis électriquement isolé selon la revendication 1 ou la revendication 2, dans lequel la seconde direction est sensiblement orthogonale à la première direction.

4. Treillis électriquement isolé selon la revendication 3, dans lequel la première direction est une direction axiale de chacun des éléments tubulaires ou une direction d'environ 45 degrés par rapport à la direction axiale.

5. Treillis électriquement isolé selon l'une quelconque des revendications précédentes, dans lequel chaque élément tubulaire a une section transversale sensiblement rectangulaire.

6. Treillis électriquement isolé selon l'une quelconque des revendications précédentes, dans lequel le premier réseau et/ou le second réseau est pourvu d'au moins une surface de préhension respective.

7. Treillis électriquement isolé selon la revendication 6, dans lequel la surface de préhension respective est pourvue sur un élément de préhension respectif fixé à un élément du premier réseau et/ou du second réseau.

8. Kit de pièces destiné à former le treillis électriquement isolé (1) selon l'une quelconque des revendications précédentes, le kit de pièces comprenant :
une pluralité d'éléments tubulaires (2, 4, 20) conçus pour former un premier réseau d'éléments tubulaires parallèles (2, 20) et un second réseau d'éléments tubulaires parallèles (4, 20) ; et
une pluralité d'attaches pivotantes (6) destinées à relier de manière pivotante le premier réseau d'éléments tubulaires parallèles au second réseau d'éléments tubulaires parallèles, chacun des éléments tubulaires (2, 4, 20) étant formé à partir d'un polymère renforcé de verre, et un premier ensemble de fibres (22) dans le polymère renforcé de verre étant sensiblement parallèles et alignés dans une première direction et un second ensemble de fibres (24) dans le polymère renforcé de verre, distinct du premier ensemble, sont sensiblement parallèles et alignés dans une second direction différente de la première direction.
